# EUROPEAN PATENT SPECIFICATION

(11) **EP 0 824 413 B1**
(45) Date of publication and mention of the grant of the patent: **13.11.2002**
(21) Application number: 96913543.3
(22) Date of filing: 03.05.1996
(51) Int. Cl.: B60G 21/06, B62D 33/10, B62D 53/02

(54) **STABILIZATION SYSTEM**
STABILISATIONSSYSTEM
SYSTEME DE STABILISATION

(30) Priority: 04.05.1995 FI 952150
(43) Date of publication of application: 25.02.1998
(73) Proprietor: Ponsse Oyj, 74200 Vieremä (FI)
(72) Inventor: HUKKANEN, Pentti, FIN-74700 Kiuruvesi (FI)
(74) Representative: Niemi, Hakan Henrik
(86) International application number: FI9600246
(87) International publication number: WO96034776

(56) References cited:
- EP-A- 0 136 910
- SE-A- 9 303 056
- US-A- 3 652 101
- US-A- 3 976 302
- US-A- 4 099 733
- US-A- 4 580 797

## Description

The present invention relates to s stabilization system for stabilizing the lateral oscillation of a cabin of a vehicle, especially of a forest tractor comprising a front and rear frame connected to one another, and in which the cabin is preferably located in the front frame, whereby the front frame is arranged onto the back frame with a joint of at least one degree of freedom that allows the rotation of the frames, and that the front frame simultaneously has at least one axle suspended so that it swings essentially with respect to the longitudinal axle of the vehicle,

Because of the lateral oscillation of the vehicle due to the roughness of the terrain, the driver is subjected to a low-frequency (0.5 to 10 Hz) vibration with an occasionally variable amplitude, which is found to be detrimental to the driver's health. The ill-effects of this vibration have been found to be exhaustion, lowered work efficiency and straining on the joints and the spinal column of the driver which in the long run will cause back disorders, for example. The effect of vibrations on human health has been widely discussed by Griffin (1990) and Depruis & Zerlett (1986).

The lateral oscillation of a vehicle also has an effect on the comfort of the driver and especially in a forestry equipment on how terrain friendly and stable the equipment is. If the lateral oscillation can be absorbed, the driving speed can be correspondingly increased, which has a direct effect on the output of the equipment.

The disadvantages mentioned above have been solved in different ways in forestry equipments at present. A simple way is to replace a two-wheel axle by a boggie that due to leverage slightly evens out the vibration. The acceleration on the driver can also be reduced by active suspension developed by automobile industry, but this will not remove low-frequency lateral oscillation of the cabin which is, according to studies, most detrimental to human health.

Most forestry equipments are of a two-frame structure, whereby the front and rear parts are connected to one another with a joint that enables the control of the equipment and allows the rotation of these parts with respect to each other if the axles of both parts are secured unmoveably onto the frame parts. This kind of a construction can be exemplified by the patent application EP 0 136910.

Both ordinary axles and boggies are generally used in mechanical transmission. The boggies are normally fixedly mounted onto the frame. A boggie distributes the traction force and the surface pressure more evenly onto the terrain and slightly evens out the vibrations. Ordinary two-wheel axles can be mounted both fixedly and jointedly onto the frame, as a so-called swing axle. Commonly one axle is fixed, while the other may swing. Vehicles equipped with swinging axles like this can for instance be found in the publications US 3 976 302 or SE 9303056.

It is also known to place wheels onto separate shafts that can be moved by a regulating unit with respect to each other and the frame of the vehicle and thus even out the roughness of the terrain as in the publication US 4 099 733.

By using prior art solutions, a problem is how to eliminate the lateral oscillation of the vehicle actively because then the whole mass of the vehicle has to be controlled by the selected lateral oscillation removal arrangement. Depending on the frequency of the swinging, it causes a great need for absorption power which will lead to great and expensive structural solutions.

The lateral oscillation of the cabin has also been reduced by suspending the cabin onto lever arms that are actively controlled by a regulating unit. However, a problem is the complexity of the mechanism and the great need for space of the lever structure as can be seen in the publication US 4 580 797.

The object of the present invention is to eliminate the disadvantages of the prior art and provide a new solution with which detrimental lateral oscillation on the driver of a vehicle can be eliminated in a simple and inexpensive manner.

The invention is based on the idea that in order that the need for hydraulic power is not unreasonably great, the mass to be moved or the speed has to be relatively small.

The object of the invention is achieved in such a manner that the stabilization system has the characteristics specified in the claims in accordance with the present invention. More exactly, this equipment according to the invention is mainly characterized in that that at least one regulating unit is arranged onto the front frame for controlling the axle so that a shifting in the front frames mass centre in a direction transverse to the longitudinal axle of the front frame is arranged to cause a thrust or a pull motion evening out the load in the regulating units until equilibrium is attained in the regulating unit and the front frame has reached an essentially vertical position the lateral oscillation caused by the roughness of the terrain being diminished or eliminated.

The solution according to the invention relates to combining a frame joint allowing the mutual rotation of the front and rear frame and a swinging axle of a vehicle, a forest tractor, in particular, so that when driving on rough terrain, the suspension together with the regulating units using them and the system controlling them actively eliminate lateral oscillation of the cabin caused by the roughness of the terrain.

It is not previously known to combine, as shown in the present invention, the swing axle of a vehicle and a frame joint allowing movement in the parallel direction, and to drive actively the part of the frame of the vehicle secured onto said joints.

The elimination of the lateral oscillation of the vehicle has considerable advantages. The work comfort of the driver will get better and the vehicle can drive faster, whereby its productivity will improve. The surface pressures of tyres are distributed evenly, whereby damage to the terrain and the roots will diminish and it will be easier to move on soft terrain. The solution according to the invention makes it possible to have narrower logging roads and diminishes damages to the bodies of trees left standing. Additionally, the straining on the frame and axles of the vehicle will decrease, which will reduce the need for maintenance and repairs.

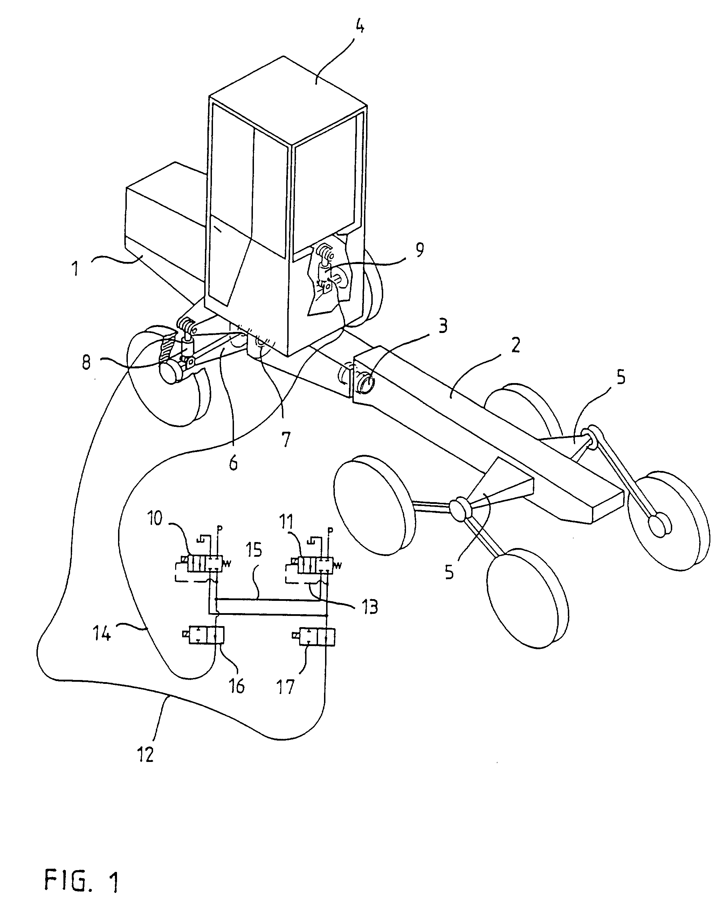

In the following, the invention will be illustrated by reference to Figure 1 which shows a schematic view of a frame structure and the suspension of axles of a forestry equipment.

The vehicle comprises two frame parts, a front frame 1 and a rear frame 2 that are jointed together by a joint 3 of at least one degree of freedom enabling the rotation of the frame parts of the vehicle in view of each other according to movement with respect to the longitudinal axle. The vehicle further comprises a cabin 4 that is connected to the front frame 1 by a passive oscillation absorber. The vehicle also comprises a boggie or an axle 5 that is secured fixedly onto the rear frame, and an axle 6 that is arranged jointedly onto the front frame 1 with a joint 7. The axle 6 jointed onto the front frame 1 can be, when needed, braced to be immovable with cylinders 8 and 9, for example. The front frame 1 jointed onto the axle 6 can be moved with cylinders 8 and 9, as with hydraulic cylinders, with respect to the axle.

When the vehicle is moving, the cylinders 8 and 9 are active and almost pressureless, whereby the axle 6 attached to the front frame 1 with the joint 7 will not shift the movement around the longitudinal axle of the vehicle to the front frame. The movement around the longitudinal axle of the vehicle is not transmitted from the rear frame 2 to the front frame 1 as the joint 3 is in between.

For controlling its regulating units the vehicle preferably comprises a hydraulic system that can be implemented with valves 10 and 11, for example. The system controls the cylinders 8 and 9 so that there is as little pressure and pressure difference as possible in the cylinders. In that case the front frame 1 tries to retain such a position during driving where the cylinder powers are as small as possible, that is, it is in equilibrium. The lateral oscillation of the vehicle is eliminated if the roughness remains within the perimeter of movement of the cylinders. The mass centre of the cabin 4 will remain essentially at the centre line of the vehicle.

The hydraulic system controlling the cylinders 8 and 9 may be as shown in the figure, comprising the valves 10 and 11 or some other equilibrium sensing system known per se, such as a proportional valve system controlled by sensors and a computer. The system according to the figure operates so that when the terrain descends at the side of the cylinder 8, the mass centre of the vehicle will shift onto the same side causing the pressure to increase in a line 12 connecting the regulating unit to the hydraulic system which line will connect the left section of the valve 11 for operating via a pilot operation line 13 in the system. In that case the pressure of the hydraulic system of the vehicle is directed to the cylinder 8 that will initiate a thrust motion. At the same time the oil from the cylinder 9 enters the tank in the system via lines 14 and 15 and through the left section of the valve 11. When the mass centre passes over the centre line of the vehicle, the pressure in the cylinder 8 and in the line 12 disappears, whereby the valve 11 closes and the thrust motion terminates. It is important for the operation to dimension the components of the system so that the response time of the control system is short enough and the regulation stable. The hydraulic system also comprises valves 16 and 17 the object of which is to brace the system by rendering the axle unmoveable with respect to the frame 1.

The invention is not restricted to the embodiment above, but various modifications are possible within the scope of the inventive idea specified in the appended claims.

## Claims

1. A stabilization system in a vehicle stabilizing the lateral oscillation of a cabin (4), especially of a forest tractor, said vehicle comprising a front (1) and rear frame (2) connected to one another, and in which the cabin (4) is located in the front frame (1), whereby the front frame (1) is arranged onto the back frame (2) with a joint (3) of at least one degree of freedom that allows the rotation of the frames, and that the front frame simultaneously has at least one axle (6) suspended so that it swings with respect to the longitudinal axle of the vehicle, **characterized in that** the front and rear frames are joined so as to allow independent rotational movement of the front and rear frames along the longitudinale axis of the vehicle and **in that** at least one regulating unit (8, 9) is arranged onto the front frame (1) for controlling the axle (6) so that a shifting in the front frames mass centre in a direction transverse to the longitudinal axle of the front frame is arranged to cause a thrust or a pull motion evening out the load in the regulating unit (8, 9) until equilibrium is attained in the regulating unit and the front frame has reached an essentially vertical position, the lateral oscillation caused by the roughness of the terrain being diminished or eliminated.

2. A stabilization system according to claim 1, **characterized in that** it comprises two regulating units (8, 9) so that a shifting in the front frames (1) mass centre in a direction transverse to the longitudinal axle of the front frame is arranged to cause a thrust motion evening out the load in the regulating unit (8, 9) closer to the mass centre and to cause a movement reducing the length of the regulating unit (8, 9) in the regulating unit on the other end of the axle (6) opposite the mass centre, which movement is proportional to the length of the thrust motion of the regulating unit closer to the mass centre.

3. A stabilisation system according to claim 1 or 2, **characterized in that** the regulating units (8, 9) are hydraulic cylinders.

## Patentansprüche

1. Stabilisierungssystem in einem Fahrzeug, das die laterale Oszillation einer Kabine (4), insbesondere eines Waldtraktors, stabilisiert, welches besagte Fahrzeug einen Frontrahmen (1) und einen Hinterrahmen (2) aufweist, die aneinander angeschlossen sind, und in welchem sich die Kabine (4) am Frontrahmen (1) befindet, wobei der Frontrahmen (1) am Hinterrahmen (2) mit einem Gelenk (3) mit wenigstens einem die Rotation der Rahmen zulassenden Freiheitsgrad angeordnet ist, und dass der Frontrahmen gleichzeitig wenigstens eine Achse (6) besitzt, die derart aufgehängt ist, dass sie in Bezug auf die Längsachse des Fahrzeugs schwingt, **dadurch gekennzeichnet, dass** die Front- und Hinterrahmen verbunden sind, um selbständige Rotationsbewegung der Front- und Hinterrahmen entlang der Längsachse des Fahrzeugs zu ermöglichen, und dass wenigstens eine Reguliereinheit (8, 9) am Frontrahmen (1) zum Steuern der Achse (6) angeordnet ist, so dass eine Verlagerung im Massenmittelpunkt des Frontrahmens in einer zur Längsachse des Frontrahmens queren Richtung angeordnet ist, einen Schub oder eine Zugbewegung zu verursachen, was die Last in der Reguliereinheit (8, 9) ausgleicht, bis das Gleichgewicht in der Reguliereinheit hergestellt wird und der Frontrahmen eine wesentlich vertikale Stellung erreicht hat, wobei die durch die Unebenheit des Geländes verursachte laterale Oszillation verringert oder eliminiert wird.

2. Stabilisierungssystem nach Anspruch 1, **dadurch gekennzeichnet, dass** es zwei Reguliereinheiten (8, 9) aufweist, so dass eine Verlagerung im Massenmittelpunkt des Frontrahmens (1) in einer zur Längsachse des Frontrahmens queren Richtung angeordnet ist, eine Schubbewegung zu verursachen, was die Last in der näher dem Massenmittelpunkt befindlichen Reguliereinheit (8, 9) ausgleicht, und eine Bewegung zu verursachen, die die Länge der Reguliereinheit (8, 9) in der am anderen Ende der Achse (6) gegenüber dem Massenmittelpunkt befindlichen Steuereinheit reduziert, welche Bewegung in Beziehung zur Länge der Schubbewegung der näher dem Massenmittelpunkt befindlichen Reguliereinheit steht.

3. Stabilisierungssystem nach Anspruch 1 oder 2, **dadurch gekennzeichnet, dass** die Reguliereinheiten (8, 9) hydraulische Zylinder sind.

## Revendications

1. Système de stabilisation dans un véhicule destiné à stabiliser l'oscillation latérale d'une cabine (4), spécialement un tracteur forestier, ledit véhicule comportant un châssis avant (1) et un châssis arrière (2) reliés l'un à l'autre, et dans lequel la cabine (4) est disposée dans le châssis avant (1), de sorte que le châssis avant (1) est disposé sur le châssis arrière (2) avec une articulation (3) d'au moins un degré de liberté qui permet la rotation des châssis, et le châssis avant a simultanément au moins un essieu (6) suspendu de telle sorte qu'il oscille par rapport à l'axe longitudinal du véhicule, **caractérisé en ce que** les châssis avant et arrière sont reliés de façon à permettre un mouvement de rotation indépendant des châssis avant et arrière le long de l'axe longitudinal du véhicule et **en ce qu'**au moins une unité de régulation (8, 9) est disposée sur le châssis avant (1) afin de commander l'essieu (6) de telle sorte qu'un déplacement dans le centre de masse du châssis avant dans une direction transversale à l'axe longitudinal du châssis avant est prévu pour provoquer une poussée ou un mouvement de traction qui égalise la charge dans l'unité de régulation (8, 9) jusqu'à ce qu'un équilibre soit atteint dans l'unité de régulation et le châssis avant ait atteint une position essentiellement verticale, l'oscillation latérale provoquée par le caractère accidenté du terrain étant diminuée ou éliminée.

2. Système de stabilisation selon la revendication 1, **caractérisé en ce qu'**il comprend deux unités de régulation (8, 9) de telle sorte qu'un déplacement dans le centre de masse du châssis avant (1) dans une direction transversale à l'axe longitudinal du châssis avant est prévu pour provoquer un mouvement de poussée qui égalise la charge dans l'unité de régulation (8, 9) plus près du centre de masse et afin de provoquer un mouvement qui réduit la longueur de l'unité de régulation (8, 9) dans l'unité de régulation à l'autre extrémité de l'essieu (6) opposé au centre de masse, lequel mouvement est proportionnel à la longueur du mouvement de poussée de l'unité de régulation plus près du centre de masse.

3. Système de stabilisation selon la revendication 1 ou 2, **caractérisé en ce que** les unités de régulation (8, 9) sont des vérins hydrauliques.
